# EUROPÄISCHE PATENTSCHRIFT

(11) **EP 2 942 107 B1**
(45) Veröffentlichungstag und Bekanntmachung des Hinweises auf die Patenterteilung: **17.10.2018**
(21) Anmeldenummer: 14167391.3
(22) Anmeldetag: 07.05.2014
(51) Int. Cl.: B05B 15/55, B08B 9/00, B08B 9/08, A01M 7/00, B05B 9/04, B05B 12/08

(54) **ENTNAHMESYSTEM**
EXTRACTION SYSTEM
SYSTÈME DE PRÉLÈVEMENT

(43) Veröffentlichungstag der Anmeldung: 11.11.2015
(73) Patentinhaber: BASF SE, 67056 Ludwigshafen am Rhein (DE)
(72) Erfinder: WEGKAMP, Heinz-Gerd, 63623 Lampertheim (DE)
(74) Vertreter: BASF IP Association

(56) Entgegenhaltungen:
- EP-A1- 0 444 596
- EP-A1- 1 245 527
- WO-A1-2013/056921
- DE-A1-102012 204 902
- US-A- 4 690 179

## Beschreibung

Die vorliegende Erfindung betrifft ein Entnahmesystem für die Entnahme von Flüssigkeiten, insbesondere von flüssigen Pflanzenschutzmitteln, nach dem Oberbegriff des Anspruchs 1 mit einem Behälter zur Aufnahme der zu entnehmenden Flüssigkeit und mit einem Kupplungselement. Bei den zu entnehmenden Flüssigkeiten handelt es sich insbesondere um Pflanzenschutzmittel. Das Kupplungselement umfasst zumindest eine behälterseitige Öffnung. Ferner umfasst das Kupplungselement zumindest eine erste Anschlussöffnung für eine Entnahmeleitung und zumindest eine zweite Anschlussöffnung für eine Spülmittelzuführleitung. Zwischen der behälterseitigen Öffnung, der ersten Anschlussöffnung und der zweiten Anschlussöffnung ist bei dem Kupplungselement eine Ventilschaltung angeordnet.

Behälter für Pflanzenschutzmittel weisen eine Entnahmeöffnung auf, die über ein spezielles Kupplungselement verschlossen werden kann, um ein geschlossenes Entnahmesystem bereitzustellen. Das Kupplungselement kann in diesem Fall zwei Öffnungen umfassen, um das Pflanzenschutzmittel aus dem Behälter zu entnehmen und gleichzeitig dem Behälter Luft zuzuführen. Des Weiteren kann die zweite Öffnung der Spülung des Behälters dienen.

Aus der WO 2012/156433 A1 ist eine Vorrichtung zum Entleeren und Spülen von Behältern bekannt, welche mit einem Pflanzenschutzmittel befüllt sind. Bei dieser Vorrichtung ist bei der Entnahmeöffnung des Behälters eine Kupplung vorgesehen, mit welcher eine Entnahmeleitung verbunden ist. Des Weiteren umfasst die Vorrichtung eine Spüleinheit mit einem Spüldorn, einer mit dem Spüldorn verbundenen Spülleitung und einer Steuereinrichtung. Mittels der Steuereinrichtung ist der Spüldorn dabei so bewegbar, dass er nach dem Entleeren des Behälters automatisch eine Wand des Behälters durchsticht und den Behälter ausspült.

Aus der WO 2013/056897 A1 ist ein Entnahmesystem für Flüssigkeiten bekannt, welches einen Behälter mit einem landwirtschaftlichen Wirkstoffmittel umfasst. An dem Einfüll- und Entnahmestutzen dieses Behälters ist ein Dreiwegehahn angeordnet. An dem Dreiwegehahn ist eine in dem Behälter nach unten hineinragende Entnahmeleitung angeordnet. Ferner ist an dem Dreiwegehahn eine Zuführleitung angeschlossen, welche an einen Tank für Reinigungs- oder Trägerflüssigkeit angeschlossen ist. Weiterhin ist an dem Dreiwegehahn eine Dosierleitung mit einer Dosierpumpe angeschlossen. Die Dosierleitung mündet in das Flüssigkeitssystem einer Feldspritze.

Schließlich ist aus der WO 2013/056921 A1 ein Kupplungselement für ein Entnahmesystem von Flüssigkeit aus einem Behälter bekannt. Das Kupplungselement ist an einen Entnahmeanschluss des Behälters ankuppelbar, wobei über das Kupplungselement und den Entnahmeanschluss Flüssigkeit aus dem Behälter entnehmbar ist. Die Entnahmeleitung umfasst dabei ein Ventilelement. Des Weiteren weist das Kupplungselement eine Spülleitung zur Spülung und/oder Reinigung der Entnahmeleitung und des Kupplungsbereichs des Kupplungselements auf.

Weitere Entnahmesysteme sind aus der EP 1 245 527 A1, der EP 0 444 596 A1 und der DE 10 2012 204 902 A1 bekannt.

Der vorliegenden Erfindung liegt die Aufgabe zugrunde, ein Entnahmesystem bereitzustellen, bei dem auf einfache Weise eine Flüssigkeit aus einem Behälter entnommen und der Behälter gespült werden kann.

Erfindungsgemäß wird diese Aufgabe durch ein Entnahmesystem mit den Merkmalen des Anspruchs 1 gelöst. Vorteilhafte Ausgestaltungen und Weiterbildungen ergeben sich aus den abhängigen Ansprüchen.

Erfindungsgemäß wird somit ein Entnahmesystem für die Entnahme von Flüssigkeiten bereitgestellt mit einem Behälter zur Aufnahme der zu entnehmenden Flüssigkeit und mit einem Kupplungselement umfassend zumindest eine behälterseitige Öffnung, zumindest eine erste Anschlussöffnung für eine Entnahmeleitung, zumindest eine zweite Anschlussöffnung für eine Spülmittelzuführleitung und eine Ventilschaltung, die zwischen der zumindest einen behälterseitigen Öffnung, der ersten Anschlussöffnung und der zweiten Anschlussöffnung angeordnet ist, wobei in einer ersten Stellung der Ventilschaltung ein Durchgang von der zumindest einen behälterseitigen Öffnung zu der ersten Anschlussöffnung geöffnet und der Durchgang von der zweiten Anschlussöffnung zu der zumindest einen behälterseitigen Öffnung verschlossen ist und wobei in einer zweiten Stellung der Ventilschaltung ein Durchgang von der zumindest einen behälterseitigen Öffnung zu der ersten Anschlussöffnung geöffnet und der Durchgang von der zweiten Anschlussöffnung zu der zumindest einen behälterseitigen Öffnung geöffnet ist.

Durch die Integration einer Ventilschaltung in das Kupplungselement des erfindungsgemäßen Entnahmesystems wird erreicht, dass es nicht mehr erforderlich ist, Ventile in der Entnahmeleitung oder der Spülmittelzuführleitung anzuordnen. Vorteilhafterweise ermöglicht das Kupplungselement in der ersten Stellung der Ventilschaltung Flüssigkeit aus dem Behälter zu entnehmen und in der zweiten Stellung der Ventilschaltung den Behälter zu durchspülen.

Gemäß einer Weiterbildung des Kupplungselements des erfindungsgemäßen Entnahmesystems ist in einer dritten Stellung der Ventilschaltung der Durchgang von der zumindest einen behälterseitigen Öffnung zu der ersten Anschlussöffnung verschlossen, der Durchgang von der zweiten Anschlussöffnung zu der zumindest einen behälterseitigen Öffnung verschlossen, jedoch ein Durchgang von der zweiten Anschlussöffnung zu der ersten Anschlussöffnung geöffnet. Diese dritte Stellung der Ventilschaltung entspricht einer Leitungsspülstellung. In diesem Fall gelangt ein über die Spülmittelzuführleitung der zweiten Anschlussöffnung zugeführtes Spülmittel nicht in den Behälter, sondern über die erste Anschlussöffnung in die Entnahmeleitung. Vorteilhafterweise ist es bei dieser dritten Stellung der Ventilschaltung möglich, die Entnahmeleitung zu spülen, ohne dass Spülmittel in den Behälter eindringt. Dies ist insbesondere bei Teilentnahmen aus dem Behälter wichtig, damit die Flüssigkeit beispielsweise das Pflanzenschutzmittel, nicht durch das Spülmittel verdünnt wird oder durch Reste anderer Pflanzenschutzmittel verunreinigt wird. Eine solche Kreuzkontamination ist bei der Verwendung von Pflanzenschutzmitteln zu vermeiden. Mittels des erfindungsgemäßen Kupplungselements kann die Spülung der Entnahmeleitung ohne Abkupplung der Entnahmeleitung von dem Kupplungselement erfolgen. Hierdurch wird die Handhabung des Entnahmesystems erheblich erleichtert.

Gemäß einer Weiterbildung des Kupplungselements des erfindungsgemäßen Entnahmesystems ist in einer vierten Stellung der Ventilschaltung der Durchgang von der zumindest einen behälterseitigen Öffnung zu der ersten Anschlussöffnung verschlossen und der Durchgang von der zweiten Anschlussöffnung zu der zumindest einen behälterseitigen Öffnung geöffnet. In der vierten Stellung der Ventilschaltung kann dem Behälter Spülmittel zugeführt werden, ohne dass dieses über die erste Anschlussöffnung wieder entnommen wird. Mittels dieser vierten Stellung der Ventilschaltung ist es vorteilhafterweise möglich, den Behälter besonders gründlich auszuspülen.

Schließlich kann die Ventilschaltung eine fünfte Stellung aufweisen, bei welcher der Durchgang von der zumindest einen behälterseitigen Öffnung zu der ersten Anschlussöffnung verschlossen ist. Ferner ist in dieser fünften Stellung der Durchgang von der zweiten Anschlussöffnung zu der zumindest einen behälterseitigen Öffnung verschlossen, wobei gleichzeitig auch der Durchgang von der zweiten Anschlussöffnung zu der ersten Anschlussöffnung verschlossen ist. Bei dieser fünften Stellung der Ventilschaltung ist der Behälter und auch die Entnahmeleitung vollständig geschlossen, so dass keine Flüssigkeit aus dem Behälter oder der Entnahmeleitung austreten kann.

Das Kupplungselement des erfindungsgemäßen Entnahmesystems weist somit zumindest zwei verschiedene Stellungen der Ventilschaltung auf. Bevorzugt weist die Ventilschaltung drei, vier und insbesondere fünf Stellungen auf. Hierdurch wird die Handhabung bei der Entnahme von Flüssigkeiten aus dem Behälter und beim Spülen des Behälters vereinfacht. Gleichzeitig können die verschiedenen Funktionalitäten der Ventilschaltung kostengünstig und platzsparend in ein einzelnes Kupplungselement integriert werden.

Das Kupplungselement kann beispielsweise zwei gegeneinander verdrehbare Elemente aufweisen. Durch Verdrehen der beiden Elemente kann die in das Kupplungselement integrierte Ventilschaltung in die verschiedenen Stellungen gebracht werden. Durch die Ventilschaltung wird somit ein 3/5-Wegeventil bereitgestellt.

Gemäß einer weiteren Ausgestaltung des Kupplungselements des erfindungsgemäßen Entnahmesystems weist dieses zumindest zwei behälterseitige Öffnungen auf. Dabei ist die erste behälterseitige Öffnung über die Ventilschaltung mit der ersten Anschlussöffnung für die Entnahmeleitung verbunden und die zweite behälterseitige Öffnung über die Ventilschaltung mit der zweiten Anschlussöffnung für die Spülmittelzuführleitung verbunden. In diesem Fall wird somit ein 4/5-Wegeventil bereitgestellt. Durch die Aufteilung der behälterseitigen Öffnung in zwei separate Öffnungen ist es vorteilhafterweise möglich, unterschiedliche Funktionalitäten bei der Entnahme der Flüssigkeit und beim Spülen mit einem Spülmittel bereitzustellen.

Gemäß einer weiteren Ausgestaltung des Kupplungselements des erfindungsgemäßen Entnahmesystems umfasst die Ventilschaltung einen Aktuator, mit welchem ein elektrisches Steuersignal in eine Veränderung der Stellung der Ventilschaltung umsetzbar ist. Vorteilhafterweise ist es hierdurch möglich, die verschiedenen Stellungen der Ventilschaltung elektronisch anzusteuern und die Ventilschaltung z. B. elektrisch, hydraulisch oder pneumatisch zu betätigen. Hierdurch wird die Handhabung eines Entnahmesystems mit dem erfindungsgemäßen Kupplungselement weiter vereinfacht.

Der Behälter des erfindungsgemäßen Entnahmesystems ist insbesondere zur Aufnahme eines Pflanzenschutzmittels geeignet. Das Kupplungselement ist insbesondere lösbar auf einer Öffnung des Behälters befestigt. Das Kupplungselement ist insbesondere in einen Verschlussdeckel für den Behälter integriert. Der Verschlussdeckel ist beispielsweise auf ein Gewinde bei der Öffnung des Behälters aufgeschraubt.

Der Behälter ist insbesondere so in dem Entnahmesystem angeordnet, dass die Entnahmeöffnung des Behälters oben und ein Boden des Behälters unten angeordnet ist. Insbesondere in diesem Fall ist die erste behälterseitige Öffnung des Kupplungselements mit einem Ende einer Steigleitung verbunden und das andere Ende der Steigleitung ist im bodenseitigen Drittel des Behälters angeordnet. Ferner ist in diesem Fall insbesondere die zweite behälterseitige Öffnung des Kupplungselements mit einem Ende einer Spülleitung verbunden und das andere Ende der Spülleitung ist im öffnungsseitigen Drittel des Behälters angeordnet.

Bei der Anordnung des Behälters im Entnahmesystem ist der Boden des Behälters unten angeordnet und die Entnahmeöffnung des Behälters oben. Das bodenseitige Drittel des Behälters ist in diesem Fall somit das untere Drittel des Behälters und das öffnungsseitige Drittel des Behälters ist in diesem Fall das obere Drittel des Behälters.

Gemäß einer anderen Ausgestaltung des Entnahmesystems kann der Behälter auch umgedreht, das heißt über Kopf, angeordnet sein. In diesem Fall sind die Entnahmeöffnung des Behälters unten und der Boden des Behälters oben angeordnet. Bei dieser Anordnung des Behälters ist es nicht erforderlich, dass eine Steigleitung mit der ersten behälterseitigen Öffnung des Kupplungselements verbunden ist. Die Spülleitung, welche mit der zweiten behälterseitigen Öffnung des Kupplungselements verbunden sein kann, ist in diesem Fall so lang, dass das Spülmittel, welches bei der oberen Öffnung der Spülleitung austritt, den Behälter optimal spült.

Gemäß einer Weiterbildung des erfindungsgemäßen Entnahmesystems ist die erste Anschlussöffnung mit einer Entnahmeleitung verbunden, in welcher eine Pumpe, insbesondere eine Saugpumpe, angeordnet ist. Alternativ oder zusätzlich ist die zweite Anschlussöffnung mit einer Spülmittelzuführleitung verbunden, in welcher eine weitere Pumpe, insbesondere eine als Saugpumpe ausgebildete Spülmittelzuführpumpe, angeordnet ist. Auf diese Weise kann über die Entnahmeleitung Flüssigkeit aus dem Behälter herausgepumpt werden und über die Spülmittelzuführleitung Spülmittel in den Behälter eingefüllt werden, welches daraufhin wieder durch die Entnahmeleitung abgepumpt werden kann.

Bei dem erfindungsgemäßen Entnahmesystem umfasst der Behälter einen Transponder, auf welchem gespeichert ist, ob der Behälter als Mehrwegbehälter oder Einwegbehälter eingesetzt wird. Das Entnahmesystem umfasst einen Empfänger, mit dem auf dem Transponder gespeicherte Daten empfangbar sind. Ferner ist eine Steuereinheit vorgesehen, mit welcher die zweite und ggf. auch die vierte Stellung der Ventilschaltung blockierbar ist. Die Steuereinheit umfasst in diesem Fall insbesondere den Aktuator, mit welchem die verschiedenen Stellungen der Ventilschaltung angesteuert werden können. Wenn der Behälter als Mehrwegbehälter eingesetzt wird, sollte verhindert werden, dass Spülmittel in dem Behälter gelangen kann. Dies ist bei der zweiten und vierten Stellung der Ventilschaltung der Fall. Insbesondere bei einer Teilentnahme beispielsweise von Pflanzenschutzmittel ist es besonders wichtig, dass kein Spülmittel in das noch in dem Behälter befindliche Pflanzenschutzmittel gelangt. Durch die angegebene Ausgestaltung des Entnahmesystems kann dies automatisiert verhindert werden.

Zusätzlich kann das Kupplungselement eine mechanische Blockiereinrichtung, wie beispielsweise einen Blockierhebel, aufweisen, welche manuell betätigt werden kann, um die zweite und/oder vierte Stellung der Ventilschaltung zu blockieren.

Die Erfindung betrifft des Weiteren die Verwendung des vorstehend beschriebenen Entnahmesystems zur Entnahme eines Pflanzenschutzmittels aus einem Einwegbehälter. Die Verwendung des Kupplungselements in Verbindung mit einem Einwegbehälter ist vorteilhaft, da in diesem Fall das Spülen des Behälters für die Entsorgung des Behälters wichtig ist. Eine sachgerechte und umweltgerechte Entsorgung ist nämlich nur dann möglich, wenn der Einwegbehälter keine oder nur sehr geringe Restmengen des Pflanzenschutzmittels enthält. Des Weiteren ist es in einem solchen Fall wichtig, dass so wenig Pflanzenschutzmittelreste wie möglich im Behälter verbleiben, da der Nutzer möglichst viel Pflanzenschutzmittel, welches er erworben hat, nutzen will.

Die Erfindung wird nun anhand von Ausführungsbeispielen mit Bezug zu den Zeichnungen erläutert.
- Figur 1: zeigt ein Ausführungsbeispiel des Kupplungselements des erfindungsgemäßen Entnahmesystems,
- Figur 2: zeigt schematisch die verschiedenen Stellungen der Ventilschaltung des Ausführungsbeispiels des Kupplungselements des erfindungsgemäßen Entnahmesystems,
- Figur 3: zeigt ein erstes Ausführungsbeispiel des erfindungsgemäßen Entnahmesystems und
- Figur 4: zeigt ein zweites Ausführungsbeispiel des erfindungsgemäßen Entnahmesystems.

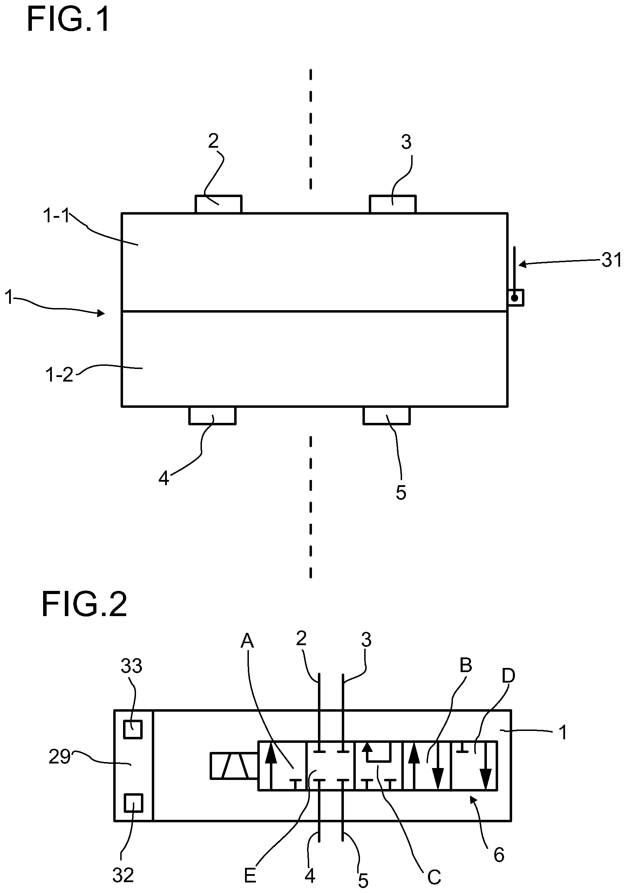

Mit Bezug zu den Figuren 1 und 2 wird ein Ausführungsbeispiel des Kupplungselements 1 des erfindungsgemäßen Entnahmesystems erläutert:
Das Kupplungselement 1 umfasst zwei gegeneinander verdrehbare Elemente 1-1 und 1-2. Bei dem ersten Element 1-1 ist eine erste Anschlussöffnung 2 für eine Entnahmeleitung und eine zweite Anschlussöffnung 3 für eine Spülmittelzuführleitung vorgesehen. Bei den Anschlussöffnungen 2 und 3 sind geeignete Stutzen vorgesehen, damit herkömmliche Leitungen flüssigkeitsdicht an das Kupplungselement 1 angeschlossen werden können. Das zweite Element 1-2 weist zumindest eine behälterseitige Öffnung auf. Im hier beschriebenen Ausführungsbeispiel umfasst das zweite Element 1-2 des Kupplungselements 1 zwei behälterseitige Öffnungen 4 und 5. Bei einer Kopplung des Kupplungselements 1 mit einem Behälter sind die behälterseitigen Öffnungen 4 und 5 in das Innere des Behälters gerichtet, wie es später erläutert wird.

In das Kupplungselement 1 integriert ist eine Ventilschaltung 6. Durch Verdrehen des ersten Elements 1-1 relativ zu dem zweiten Element 1-2 wird die Ventilschaltung 6 in verschiedene Stellungen gebracht, die schematisch in Figur 2 veranschaulicht sind. Diese Stellungen der Ventilschaltung 6 werden im Folgenden erläutert:
In einer ersten Stellung A ist ein Durchgang von der behälterseitigen Öffnung 4 zu der ersten Anschlussöffnung 2 für die Entnahmeleitung geöffnet. Der Durchgang von der zweiten Anschlussöffnung 3 für die Spülmittelzuführleitung zu der zweiten behälterseitigen Öffnung 5 ist hingegen verschlossen.

Durch Drehen des ersten Elements 1-1 gegenüber dem zweiten Element 1-2 kann die Ventilschaltung 3 von der ersten Stellung A in die zweite Stellung B gebracht werden. Bei der zweiten Stellung B ist der Durchgang von der ersten behälterseitigen Öffnung 4 zu der ersten Anschlussöffnung 2 geöffnet. Des Weiteren ist auch der Durchgang von der zweiten Anschlussöffnung 3 zu der zweiten behälterseitigen Öffnung 5 geöffnet.

Durch ein weiteres Verdrehen des ersten Elements 1-1 gegenüber dem zweiten Element 1-2 kann die Ventilschaltung 6 von der zweiten Stellung B in die dritte Stellung C gebracht werden. Bei der dritten Stellung C ist der Durchgang von den behälterseitigen Öffnungen 4 und 5 zu der ersten Anschlussöffnung 2 verschlossen. Gleichermaßen ist der Durchgang von der zweiten Anschlussöffnung 3 zu den behälterseitigen Öffnungen 4 und 5 verschlossen. Es wird jedoch ein Durchgang von der zweiten Anschlussöffnung 3 zu der ersten Anschlussöffnung 2 geöffnet, so dass Flüssigkeit direkt von der zweiten Anschlussöffnung 3 zu der ersten Anschlussöffnung 2 fließen kann.

Durch ein weiteres Verdrehen des ersten Elements 1-1 gegenüber dem zweiten Element 1-2 kann die Ventilschaltung 6 von der dritten Stellung C in die vierte Stellung D gebracht werden. In der vierten Stellung D ist der Durchgang von der ersten behälterseitigen Öffnung 4 zu der ersten Anschlussöffnung 2 verschlossen und der Durchgang von der zweiten Anschlussöffnung 3 zu der zweiten behälterseitigen Öffnung 5 geöffnet.

Durch ein weiteres Verdrehen des ersten Elements 1-1 gegenüber dem zweiten Element 1-2 kann die Ventilschaltung 6 von der vierten Stellung D in die fünfte Stellung E gebracht werden. In der fünften Stellung E ist der Durchgang von der ersten behälterseitigen Öffnung 4 zu der ersten Anschlussöffnung 2 verschlossen. Gleichermaßen ist der Durchgang von der zweiten Anschlussöffnung 3 zu der zweiten behälterseitigen Öffnung 5 verschlossen. Des Weiteren ist auch der Durchgang von der zweiten Anschlussöffnung 3 zu der ersten Anschlussöffnung 1 verschlossen.

Bei dem hier beschriebenen Ausführungsbeispiel mit zwei behälterseitigen Öffnungen 4 und 5 ist die Ventilschaltung 6 so ausgebildet, dass von der ersten behälterseitigen Öffnung 4 allenfalls ein Durchgang zu der ersten Anschlussöffnung 2 geschaffen werden kann, nicht jedoch zu der zweiten Anschlussöffnung 3. Ferner kann zu der zweiten behälterseitigen Öffnung 5 allenfalls ein Durchgang von der zweiten Anschlussöffnung 3 geschaffen werden, nicht jedoch von der Anschlussöffnung 2. Falls bei einer anderen Ausgestaltung der Ventilschaltung nur eine einzige behälterseitige Öffnung vorgesehen ist, wäre die Ventilschaltung 6 so ausgebildet, wie es sich bei einer Zusammenführung der beiden behälterseitigen Öffnungen 4 und 5 ergeben würde.

In das Kupplungselement 1 kann des Weiteren eine elektrische Steuereinheit 29 integriert sein, welche schematisch in Figur 2 dargestellt ist. Die Steuereinheit 29 umfasst einen Empfänger 32 zum Empfang von Signalen eines Transponders, wie es später erläutert wird. Des Weiteren umfasst die Steuereinheit 29 einen Aktuator 33. Der Aktuator 33 ist mit den Elementen 1-1 und 1-2 des Kupplungselements 1 so gekoppelt, dass er diese beiden Elemente 1-1 und 1-2 gegeneinander verdrehen kann und auf diese Weise die verschiedenen Stellungen der Ventilschaltung 6 ansteuern kann. Ein von der Steuereinheit 29 erzeugtes elektrisches Steuersignal kann von dem Aktuator 33 in eine Veränderung der Stellung der Ventilschaltung 6 umgesetzt werden. Der Aktuator 33 kann beispielsweise einen Elektromotor, einen Hydraulikmotor oder einen pneumatisch angetriebenen Motor umfassen, welcher das erste Element 1-1 gegenüber dem zweiten Element 1-2 verdreht.

Des Weiteren umfasst das Kupplungselement 1 einen mechanischen Blockierhebel 31. Dieser Blockierhebel 31 ist bei dem ersten Element 1-1 vorgesehen. Er kann von einem Nutzer umgelegt werden, so dass er mit Anschlägen bei dem zweiten Element 1-2 wechselwirken kann. Diese Anschläge bei dem zweiten Element 1-2 sind so vorgesehen, dass das erste Element 1-1 nicht so gegenüber dem zweiten Element 1-2 verdreht werden kann, dass die Ventilschaltung 6 in bestimmte Stellungen gebracht werden kann. Im vorliegenden Ausführungsbeispiel sind durch den Blockierhebel 31 die zweite Stellung B und vierte Stellung D blockierbar. Eine solche Blockierung kann alternativ oder zusätzlich von der Steuereinheit 29 bereitgestellt werden.

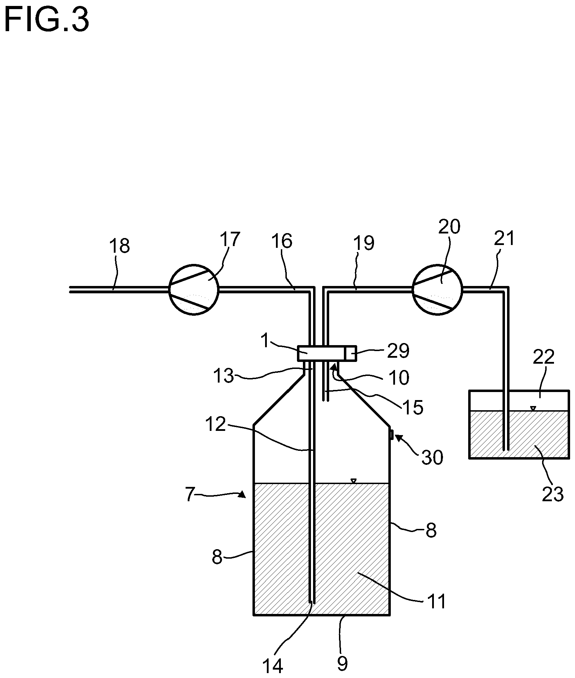

Im Folgenden wird mit Bezug zu Figur 3 ein erstes Ausführungsbeispiel eines Entnahmesystems erläutert, welches das Kupplungselement 1 verwendet.

Das Entnahmesystem umfasst einen Behälter 7 zur Aufnahme der zu entnehmenden Flüssigkeit 11. In diesem Fall handelt es sich bei der Flüssigkeit um ein Pflanzenschutzmittel. Der Behälter 7 weist Seitenwände 8, einen Boden 9 und eine Entnahmeöffnung 10 auf. Bei der Entnahmeöffnung 10 ist ein Gewinde vorgesehen, auf welches ein Gegengewinde des Kupplungselements 1 geschraubt ist, so dass das Kupplungselement 1 in einen Verschlussdeckel für den Behälter 7 integriert ist. Die behälterseitigen Öffnungen 4 und 5 sind in diesem Fall ins Innere des Behälters 7 gerichtet, die Anschlussöffnungen 2 und 3 sind hingegen außen angeordnet.

An die erste behälterseitige Öffnung 4 ist eine Steigleitung 12 angeschlossen. Das obere Ende 13 der Steigleitung 12 ist somit mit dem Stutzen der ersten behälterseitigen Öffnung 4 des Kupplungselements 1 verbunden. Das untere Ende 14 der Steigleitung 12 ragt bis in zumindest das untere Drittel des Behälters 7 hinein. Das untere Ende 14 weist eine Öffnung zum Ansaugen von Flüssigkeit 11 auf, welche sich in dem Behälter 7 befindet.

Die Öffnung beim unteren Ende 14 der Steigleitung 12 ist insbesondere benachbart zu der Innenwand des Bodens 9 angeordnet. Die Öffnung bei dem unteren Ende 14 befindet sich dabei so nahe wie möglich an der Innenwand des Bodens 9, sie weist jedoch einen solchen Abstand von dieser Innenwand auf, dass die in dem Behälter 7 befindliche Flüssigkeit ungehindert in die Steigleitung 12 eintreten kann. Der Abstand der Öffnung beim unteren Ende 14 der Steigleitung 12 von der Innenwand des Bodens 9 kann beispielsweise von der Viskosität des Pflanzenschutzmittels abhängen, welches von dem Behälter 7 aufgenommen werden soll.

Der Stutzen der zweiten behälterseitigen Öffnung 5 des Kupplungselements 1 ist mit einer Spülleitung 15 verbunden. Das obere Ende der Spülleitung 15 ist flüssigkeitsdicht an den Stutzen der zweiten behälterseitigen Öffnung 5 angeschlossen. Das untere Ende der Spülleitung 15 ist im oberen Drittel des Behälters 7 angeordnet.

Auf der anderen Seite des Kupplungselements 1 ist der Stutzen der ersten Anschlussöffnung 2 mit einer Entnahmeleitung 16 flüssigkeitsdicht verbunden. Die Entnahmeleitung 16 ist mit einer Pumpe 17 gekoppelt, welche Flüssigkeit ansaugt und in die Leitung 18 fördert. Die Leitung 18 kann schließlich mit einer Ausstoßeinrichtung, wie beispielsweise einer Spritzpistole verbunden sein, um die entnommene Flüssigkeit 11 auszubringen.

Die zweite Anschlussöffnung 3 ist flüssigkeitsdicht mit einer Leitung 19 verbunden. Bei der Leitung 19 ist eine weitere Pumpe 20 angeordnet, die wiederum mit einer Leitung 21 gekoppelt ist. Die Leitung 21 ist in einen Tank 22 eingeführt, in welchem sich flüssiges Spülmittel 23, wie beispielsweise Wasser, befindet. Über die Pumpe 20 wird das Spülmittel 23 angesaugt und in die Leitung 19 gefördert.

An der Außenseite des Behälters 7 ist des Weiteren ein Transponder 30, beispielsweise ein RFID-Transponder, befestigt. Auf dem Transponder ist gespeichert, ob der Behälter 7 als Mehrwegbehälter oder Einwegbehälter eingesetzt wird. Des Weiteren können weitere Daten, wie beispielsweise eine genaue Bezeichnung des Pflanzenschutzmittels, welches sich in dem Behälter befindet, sowie die enthaltene Menge an Pflanzenschutzmittel auf den Transponder 30 gespeichert sein. Die von dem Transponder 30 gespeicherten Daten können von dem Empfänger 32 der Steuereinheit 29 empfangen werden. In Abhängigkeit von den empfangenen Daten steuert die Steuereinheit 29 den Aktuator 33 an. Wenn die empfangenen Daten anzeigen, dass der Behälter 7 als Einwegbehälter eingesetzt wird, steuert die Steuereinheit 29 den Aktuator 33 so an, dass alle Stellungen der Ventilschaltung 6 angesteuert werden können. Wenn die empfangenen Daten hingegen anzeigen, dass der Behälter 7 als Mehrwegbehälter eingesetzt wird, steuert die Steuereinheit 29 den Aktuator 33 so an, dass die zweite B und vierte Stellung D vom Aktuator 33 nicht angesteuert werden kann. Hierdurch wird bei Mehrwegbehältern verhindert, dass beispielsweise bei Teilentnahmen Spülmittel 23 über das Kupplungselement 1 in den Behälter 7 gelangen kann.

Alternativ oder zusätzlich können diese Stellungen der Ventilschaltung 6 auch durch Umlegen des Blockierhebels 31 blockiert werden.

Die verschiedenen Ventilstellungen der Ventilschaltung 6 werden bei dem in Figur 3 gezeigten Entnahmesystem wie folgt eingesetzt:
Beim Transport des Entnahmesystems findet sich die Ventilschaltung 6 in der fünften Stellung E. Das Kupplungselement 1 dient in diesem Fall als Verschlussdeckel. Es kann keine Flüssigkeit 11 aus dem Behälter 7 entweichen. Gleichermaßen kann kein Spülmittel 23 in dem Behälter 7 gelangen.

Für die Entnahme der Flüssigkeit 11 wird die Ventilschaltung 6 in die erste Stellung A gebracht. Dies kann manuell oder mittels des Aktuators 23 erfolgen. Wenn die Pumpe 17 eingeschaltet wird, wird über die Steigleitung 12 Flüssigkeit 11 angesaugt und durch das Kupplungselement 1 in die Leitungen 16 und 18 gefördert. Zum Ausgleich der entnommenen Flüssigkeit 11 kann ein Belüftungsventil bei dem Kupplungselement 1 oder dem Behälter 7 vorgesehen sein.

Während der Entnahme der Flüssigkeit 11 kann die entnommene Menge zum Beispiel durch Wiegen oder eine Durchflussmessung erfasst werden. Die entnommene Menge wird an die Steuereinheit 29 und/oder die Pumpe 17 übertragen. Bei Erreichen der Sollmenge kann die Steuereinheit 29 mittels des Aktuators die Ventilschaltung 6 in die eine Stellung bringen, bei welcher keine Entnahme erfolgt.

Wenn nur eine Teilentnahme der Flüssigkeit 11 aus dem Behälter 7 erfolgt ist, kann es erforderlich sein, die Leitungen 16 und 18 zu spülen. Hierfür wird die Ventilschaltung 6 in die dritte Stellung C gebracht. Wenn nun die Pumpen 17 und 20 eingeschaltet werden, wird Spülmittel 23 von der Leitung 21 in die Leitung 19, durch das Kupplungselement 1 in die Leitungen 16 und 18 gefördert, so dass die Leitungen 16 und 18 sowie die Anschlussöffnungen 2 und 3 des Kupplungselements 1 gespült werden. Dabei gelangt kein Spülmittel 23 ins Innere des Behälters 7. Die in dem Behälter 7 enthaltene Flüssigkeit 11 wird in diesem Fall somit nicht durch das Spülmittel 23 verdünnt.

Wenn es sich bei dem Behälter 7 um einen Einwegbehälter handelt und die Flüssigkeit 11 vollständig entnommen wurde, ist es für die Entsorgung des Behälters 7 erforderlich, diesen zu spülen. Hierfür wird die Ventilschaltung 6 des Kupplungselements 1 in die zweite Stellung B gebracht. Werden nun die Pumpen 17 und 20 eingeschaltet, wird Spülmittel 23 über die Leitungen 21 und 19 durch das Kupplungselement 1 hindurch über die Spülleitung 15 in den Behälter 7 gefördert. Dort werden Reste der Flüssigkeit 11, das heißt beispielsweise des Pflanzenschutzmittels, verdünnt. Das Spülmittel 23 wird zusammen mit den Resten der Flüssigkeit 11 über die Steigleitung 14 durch das Kupplungselement 1 und die Leitungen 16 und 18 entnommen.

Alternativ oder zusätzlich ist es möglich, die Ventilschaltung 6 zum Spülen in die vierte Stellung D zu bringen. In diesem Fall wird der Behälter 7 mit Spülmittel 23 gefüllt. Danach kann die Ventilschaltung 6 in die erste Stellung A gebracht werden, um den Behälter 7 wieder zu entleeren.

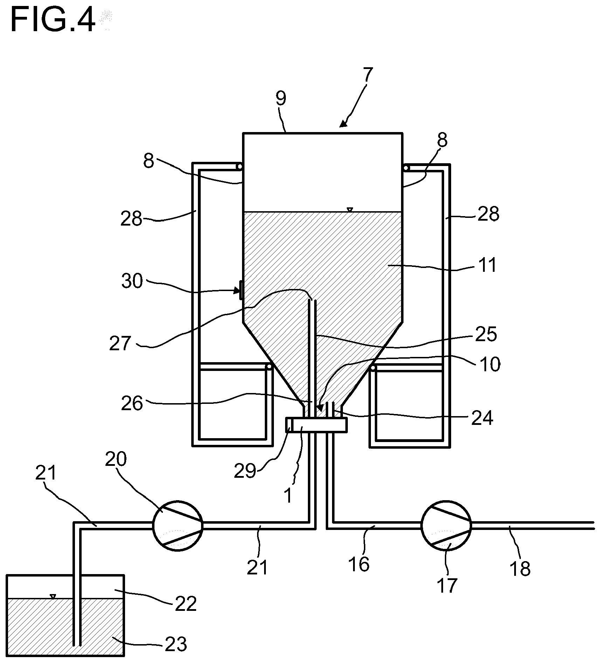

Mit Bezug zu Figur 4 wird ein zweites Ausführungsbeispiel des Entnahmesystems beschrieben. Elemente dieses Ausführungsbeispiels, die den Elementen entsprechen, die mit Bezug dem Ausführungsbeispiel der Figur 3 beschrieben wurden, werden mit gleichen Bezugszeichen bezeichnet und zur Vermeidung von Wiederholungen nicht nochmals erläutert.

Das Entnahmesystem des zweiten Ausführungsbeispiels unterscheidet sich von dem Entnahmesystem des ersten Ausführungsbeispiels dadurch, dass der Behälter 7 anders herum, das heißt über Kopf, verwendet wird. Der Boden 9 ist in diesem Fall oben angeordnet und die Entnahmeöffnung 10 des Behälters 7 unten. Für diese Anordnung des Behälters 7 ist ein Gestell 28 vorgesehen, welches den Behälter 7 über Kopf aufnimmt. Die beiden Anschlussöffnungen 2 und 3 sind wie bei dem ersten Ausführungsbeispiel mit den Leitungen 16 und 21 verbunden. Die erste behälterseitige Öffnung 4 ist hingegen mit gar keiner gesonderten Leitung oder, wie in Figur 4 gezeigt, mit einer sehr kurzen Leitung 24 verbunden, um die Flüssigkeit 11 aus dem Behälter 7 zu entnehmen. Die zweite behälterseitige Öffnung 5 ist hingegen mit einer längeren Spülleitung 25 verbunden. Das untere Ende 26 der Spülleitung 25 ist mit dem Stutzen der zweiten behälterseitigen Öffnung 5 des Kupplungselements 1 gekoppelt. Das obere Ende 27 der Spülleitung 25 reicht so weit in den Behälter 7 hinein, dass das Spülmittel 23 optimal das Innere des Behälters 7 ausspült. Hierfür kann bei dem oberen Ende 27 der Spülleitung 25 auch eine Düse vorgesehen sein, um das Spülmittel 23 im Inneren des Behälters 7 zu verteilen.

Die Verwendung und Ansteuerung des Entnahmesystems des zweiten Ausführungsbeispiels erfolgt dann wie bei dem Entnahmesystem des ersten Ausführungsbeispiels.

### Bezugszeichenliste

- 1: Kupplungselement
- 2: erste Anschlussöffnung
- 3: zweite Anschlussöffnung
- 4: erste behälterseitige Öffnung
- 5: zweite behälterseitige Öffnung
- 6: Ventilschaltung
- 7: Behälter
- 8: Seitenwand
- 9: Boden
- 10: Entnahmeöffnung
- 11: Flüssigkeit, insbesondere Pflanzenschutzmittel
- 12: Steigleitung
- 13: oberes Ende der Steigleitung 12
- 14: unteres Ende der Steigleitung 12
- 15: Spülleitung
- 16: Entnahmeleitung
- 17: Pumpe
- 18: Leitung
- 19: Spülmittelzuführleitung
- 20: Pumpe
- 21: Leitung
- 22: Tank
- 23: Spülmittel
- 24: Leitung
- 25: Spülleitung
- 26: unteres Ende der Spülleitung 25
- 27: oberes Ende der Spülleitung 25
- 28: Gestell
- 29: Steuereinheit
- 30: Transponder
- 31: Blockierhebel
- 32: Empfänger
- 33: Aktuator

## Patentansprüche

1. Entnahmesystem für die Entnahme von Flüssigkeiten mit einem Behälter (7) zur Aufnahme der zu entnehmenden Flüssigkeit (11) und mit einem Kupplungselement (1) umfassend zumindest eine behälterseitige Öffnung (4, 5), zumindest eine erste Anschlussöffnung (2) für eine Entnahmeleitung (16), zumindest eine zweite Anschlussöffnung (3) für eine Spülmittelzuführleitung (19) und eine Ventilschaltung (6), die zwischen der zumindest einen behälterseitigen Öffnung (4, 5), der ersten Anschlussöffnung (2) und der zweiten Anschlussöffnung (3) angeordnet ist, wobei in einer ersten Stellung (A) der Ventilschaltung (6) ein Durchgang von der zumindest einen behälterseitigen Öffnung (4) zu der ersten Anschlussöffnung (2) geöffnet und der Durchgang von der zweiten Anschlussöffnung (3) zu der zumindest einen behälterseitigen Öffnung (5) verschlossen ist und wobei in einer zweiten Stellung (B) der Ventilschaltung (6) ein Durchgang von der zumindest einen behälterseitigen Öffnung (4) zu der ersten Anschlussöffnung (2) geöffnet und der Durchgang von der zweiten Anschlussöffnung (3) zu der zumindest einen behälterseitigen Öffnung (5) geöffnet ist,
**dadurch gekennzeichnet, dass**
der Behälter (7) einen Transponder (30) umfasst, auf welchem gespeichert ist, ob der Behälter (7) als Mehrwegbehälter oder Einwegbehälter eingesetzt wird, und dass das Entnahmesystem einen Empfänger (32), mit dem auf dem Transponder (30) gespeicherte Daten empfangbar sind, und eine Steuereinheit (29) aufweist, mit welcher die zweite Stellung (B, D) der Ventilschaltung (6) blockierbar ist.

2. Entnahmesystem nach Anspruch 1,
**dadurch gekennzeichnet, dass**
in einer dritten Stellung (C) der Ventilschaltung (6) der Durchgang von der zumindest einen behälterseitigen Öffnung (4) zu der ersten Anschlussöffnung (2) verschlossen, der Durchgang von der zweiten Anschlussöffnung (3) zu der zumindest einen behälterseitigen Öffnung (5) verschlossen ist, jedoch ein Durchgang von der zweiten Anschlussöffnung (3) zu der ersten Anschlussöffnung (2) geöffnet ist.

3. Entnahmesystem nach Anspruch 2,
**dadurch gekennzeichnet, dass**
in einer vierten Stellung (D) der Ventilschaltung (6) der Durchgang von der zumindest einen behälterseitigen Öffnung (4) zu der ersten Anschlussöffnung (2) verschlossen und der Durchgang von der zweiten Anschlussöffnung (3) zu der zumindest einen behälterseitigen Öffnung (5) geöffnet ist.

4. Entnahmesystem nach einem der vorhergehenden Ansprüche,
**dadurch gekennzeichnet, dass**
in einer fünften Stellung (E) der Ventilschaltung (6) der Durchgang von der zumindest einen behälterseitigen Öffnung (4) zu der ersten Anschlussöffnung (2) verschlossen, der Durchgang von der zweiten Anschlussöffnung (3) zu der zumindest einen behälterseitigen Öffnung (5) verschlossen ist und der Durchgang von der zweiten Anschlussöffnung (3) zu der ersten Anschlussöffnung (2) verschlossen ist.

5. Entnahmesystem nach einem der vorhergehenden Ansprüche,
**dadurch gekennzeichnet, dass**
die behälterseitige Öffnung in zwei separate behälterseitige Öffnungen (4, 5) aufgeteilt ist, wobei die erste behälterseitige Öffnung (4) der zwei separaten behälterseitigen Öffnungen (4, 5) über die Ventilschaltung (6) mit der ersten Anschlussöffnung (2) für die Entnahmeleitung (16) verbunden ist und die zweite behälterseitige Öffnung (5) der zwei separaten behälterseitigen Öffnungen (4, 5) über die Ventilschaltung (6) mit der zweiten Anschlussöffnung (3) für die Spülmittelzuführleitung (19) verbunden ist.

6. Entnahmesystem nach einem der vorhergehenden Ansprüche,
**dadurch gekennzeichnet, dass**
die Ventilschaltung (6) einen Aktuator (33) umfasst, mit welchem ein elektrisches Steuersignal in einer Veränderung der Stellung der Ventilschaltung (6) umsetzbar ist.

7. Entnahmesystem nach einem der vorhergehenden Ansprüche ,
**dadurch gekennzeichnet, dass**
das Kupplungselement (1) lösbar auf einer Entnahmeöffnung (10) des Behälters (7) befestigt ist.

8. Entnahmesystem nach einem der vorhergehenden Ansprüche,
**dadurch gekennzeichnet, dass**
der Behälter (7) so in dem Entnahmesystem angeordnet ist, dass die Entnahmeöffnung (10) des Behälters (7) oben und ein Boden (9) des Behälters (7) unten angeordnet sind.

9. Entnahmesystem nach Anspruch 8,
**dadurch gekennzeichnet, dass**
die erste behälterseitige Öffnung (4) der zwei separaten behälterseitigen Öffnungen (4, 5) des Kupplungselements (1) mit einem Ende (13) einer Steigleitung (12) verbunden ist und das andere Ende (14) der Steigleitung (12) im bodenseitigen Drittel des Behälters (7) angeordnet ist.

10. Entnahmesystem nach Anspruch 5 und 8 oder 9,
**dadurch gekennzeichnet, dass**
die zweite behälterseitige Öffnung (5) der zwei separaten behälterseitigen Öffnungen (4, 5) des Kupplungselements (1) mit einem Ende einer Spülleitung (15) verbunden ist und das andere Ende der Spülleitung (15) im öffnungsseitigen Drittel des Behälters (7) angeordnet ist.

11. Entnahmesystem nach einem der Ansprüche 1 bis 7,
**dadurch gekennzeichnet, dass**
der Behälter (7) so in dem Entnahmesystem angeordnet ist, dass die Entnahmeöffnung (10) des Behälters (7) unten und ein Boden (9) des Behälters (7) oben angeordnet sind.

12. Entnahmesystem nach einem der Ansprüche 1 bis 11,
**dadurch gekennzeichnet, dass**
die erste Anschlussöffnung (2) mit einer Entnahmeleitung (16) verbunden ist, in welcher eine Pumpe (17) angeordnet ist und/oder die zweite Anschlussöffnung (3) mit einer Spülmittelzuführleitung (19) verbunden ist, in welcher eine weitere Pumpe (20) angeordnet ist.

13. Verwendung des Entnahmesystems nach einem der Ansprüche 1 bis 12 in einem Entnahmesystem zur Entnahme eines Pflanzenschutzmittels aus einem Einwegbehälter.

## Claims

1. An extraction system for extracting liquids, having a container (7) for receiving the liquid (11) to be extracted, and having a coupling element (1) comprising at least one container-side opening (4, 5), at least one first port opening (2) for an extraction line (16), at least one second port opening (3) for a rinsing-agent feed line (19), and a valve-switching means (6), which is arranged between the at least one container-side opening (4, 5), the first port opening (2) and the second port opening (3), wherein, in a first position (A) of the valve-switching means (6), a passage from the at least one container-side opening (4) to the first port opening (2) is open, and the passage from the second port opening (3) to the at least one container-side opening (5) is closed, and wherein, in a second position (B) of the valve-switching means (6), a passage from the at least one container-side opening (4) to the first port opening (2) is open, and the passage from the second port opening (3) to the at least one container-side opening (5) is open,
wherein
the container (7) comprises a transponder (30), on which is stored the information as to whether the container (7) is being used as a reusable container or a disposable container, and wherein the extraction system has a receiver (32), with which data stored on the transponder (30) is receivable, and a control unit (29), with which the second position (B, D) of the valve-switching means (6) is able to be blocked.

2. The extraction system according to claim 1,
wherein,
in a third position (C) of the valve-switching means (6), the passage from the at least one container-side opening (4) to the first port opening (2) is closed, the passage from the second port opening (3) to the at least one container-side opening (5) is closed, but a passage from the second port opening (3) to the first port opening (2) is open.

3. The extraction system according to claim 2,
wherein,
in a fourth position (D) of the valve-switching means (6), the passage from the at least one container-side opening (4) to the first port opening (2) is closed, and the passage from the second port opening (3) to the at least one container-side opening (5) is open.

4. The extraction system according to any one of the preceding claims,
wherein,
in a fifth position (E) of the valve-switching means (6), the passage from the at least one container-side opening (4) to the first port opening (2) is closed, the passage from the second port opening (3) to the at least one container-side opening (5) is closed, and the passage from the second port opening (3) to the first port opening (2) is closed.

5. The extraction system according to any one of the preceding claims,
wherein
the container-side opening is subdivided into two separate container-side openings (4, 5), wherein the first container-side opening (4) of the two separate container-side openings (4, 5) is connected to the first port opening (2) for the extraction line (16) via the valve-switching means (6), and the second container-side opening (5) of the two separate container-side openings (4, 5) is connected to the second port opening (3) for the rinsing-agent feed line (19) via the valve-switching means (6).

6. The extraction system according to any one of the preceding claims,
wherein
the valve-switching means (6) comprises an actuator (33), with which an electric control signal is convertible into a change in the position of the valve-switching means (6).

7. The extraction system according to any one of the preceding claims,
wherein
the coupling element (1) is detachably fastened to an extraction opening (10) of the container (7).

8. The extraction system according to any one of the preceding claims,
wherein
the container (7) is arranged in the extraction system such that the extraction opening (10) of the container (7) is arranged at the top and a base (9) of the container (7) is arranged at the bottom.

9. The extraction system according to claim 8,
wherein
the first container-side opening (4) of the two separate container-side openings (4, 5) of the coupling element (1) is connected to one end (13) of a riser (12), and the other end (14) of the riser (12) is arranged in the base-side third of the container (7).

10. The extraction system according to claims 5 and 8 or 9,
wherein
the second container-side opening (5) of the two separate container-side openings (4, 5) of the coupling element (1) is connected to one end of a rinsing line (15), and the other end of the rinsing line (15) is arranged in the opening-side third of the container (7).

11. The extraction system according to any one of claims 1 to 7,
wherein
the container (7) is arranged in the extraction system such that the extraction opening (10) of the container (7) is arranged at the bottom and a base (9) of the container (7) is arranged at the top.

12. The extraction system according to any one of claims 1 to 11,
wherein
the first port opening (2) is connected to an extraction line (16), in which a pump (17) is arranged, and/or the second port opening (3) is connected to a rinsing-agent feed line (19), in which a further pump (20) is arranged.

13. The use of the extraction system according to any one of claims 1 to 12 in an extraction system for extracting a crop-protection agent from a disposable container.

## Revendications

1. Système de prélèvement pour le prélèvement de liquides, comprenant un récipient (7) pour recevoir le liquide (11) devant être prélevé et comprenant un élément d'accouplement (1) comprenant au moins une ouverture (4, 5) du côté du récipient, au moins une première ouverture de raccordement (2) pour une conduite de prélèvement (16), au moins une deuxième ouverture de raccordement (3) pour une conduite d'alimentation en fluide de rinçage (19) et un branchement de soupape (6) qui est disposé entre l'au moins une ouverture (4, 5) du côté du récipient, la première ouverture de raccordement (2) et la deuxième ouverture de raccordement (3), dans une première position (A) du branchement de soupape (6), un passage allant de l'au moins une ouverture (4) du côté du récipient jusqu'à la première ouverture de raccordement (2) étant ouvert et le passage allant de la deuxième ouverture de raccordement (3) à l'au moins une ouverture (5) du côté du récipient étant fermé, et dans une deuxième position (B) du branchement de soupape (6), un passage allant de l'au moins une ouverture (4) du côté du récipient jusqu'à la première ouverture de raccordement (2) étant ouvert et le passage allant de la deuxième ouverture de raccordement (3) à l'au moins une ouverture (5) du côté du récipient étant ouvert,
**caractérisé en ce que**
le récipient (7) comprend un transpondeur (30) sur lequel on mémorise si le récipient (7) est utilisé en tant que récipient réutilisable ou jetable et **en ce que** le système de prélèvement présente un récepteur (32) avec lequel les données mémorisées sur le transpondeur (30) peuvent être reçues, et une unité de commande (29), avec laquelle la deuxième position (B, D) du branchement de soupape (6) peut être bloquée.

2. Système de prélèvement selon la revendication 1,
**caractérisé en ce que**
dans une troisième position (C) du branchement de soupape (6), le passage de l'au moins une ouverture (4) du côté du récipient à la première ouverture de raccordement (2) est fermé, le passage de la deuxième ouverture de raccordement (3) à l'au moins une ouverture du côté du récipient (5) est fermé, toutefois un passage allant de la deuxième ouverture de raccordement (3) à la première ouverture de raccordement (2) est ouvert.

3. Système de prélèvement selon la revendication 2,
**caractérisé en ce que**
dans une quatrième position (D) du branchement de soupape (6), le passage allant de l'au moins une ouverture (4) du côté du récipient jusqu'à la première ouverture de raccordement (2) est fermé et le passage allant de la deuxième ouverture de raccordement (3) à l'au moins une ouverture (5) du côté du récipient est ouvert.

4. Système de prélèvement selon l'une quelconque des revendications précédentes,
**caractérisé en ce que**
dans une cinquième position (E) du branchement de soupape (6), le passage allant de l'au moins une ouverture (4) du côté du récipient jusqu'à la première ouverture de raccordement (2) est fermé, le passage allant de la deuxième ouverture de raccordement (3) jusqu'à l'au moins une ouverture (5) du côté du récipient est fermé et le passage allant de la deuxième ouverture de raccordement (3) jusqu'à la première ouverture de raccordement (2) est fermé.

5. Système de prélèvement selon l'une quelconque des revendications précédentes,
**caractérisé en ce que**
l'ouverture du côté du récipient est divisée en deux ouvertures séparées (4, 5) du côté du récipient, la première ouverture (4) du côté du récipient des deux ouvertures séparées (4, 5) du côté du récipient étant connectée par le biais du branchement de soupape (6) à la première ouverture de raccordement (2) pour la conduite de prélèvement (16) et la deuxième ouverture (5) du côté du récipient des deux ouvertures séparées (4, 5) du côté du récipient étant connectée par le biais du branchement de soupape (6) à la deuxième ouverture de raccordement (3) pour la conduite d'alimentation en fluide de rinçage (19).

6. Système de prélèvement selon l'une quelconque des revendications précédentes,
**caractérisé en ce que**
le branchement de soupape (6) comprend un actionneur (33) avec lequel un signal de commande électrique peut être converti en une variation de la position du branchement de soupape (6).

7. Système de prélèvement selon l'une quelconque des revendications précédentes,
**caractérisé en ce que**
l'élément d'accouplement (1) est fixé de manière amovible sur une ouverture de prélèvement (10) du récipient (7).

8. Système de prélèvement selon l'une quelconque des revendications précédentes,
**caractérisé en ce que**
le récipient (7) est disposé dans le système de prélèvement de telle sorte que l'ouverture de prélèvement (10) du récipient (7) soit située en haut et qu'un fond (9) du récipient (7) soit situé en bas.

9. Système de prélèvement selon la revendication 8,
**caractérisé en ce que**
la première ouverture (4) du côté du récipient des deux ouvertures séparées (4, 5) du côté du récipient de l'élément d'accouplement (1) est connectée à une extrémité (13) d'une conduite montante (12) et l'autre extrémité (14) de la conduite montante (12) est disposée dans le tiers du récipient (7) du côté du fond.

10. Système de prélèvement selon la revendication 5 et 8 ou 9,
**caractérisé en ce que**
la deuxième ouverture (5) du côté du récipient des deux ouvertures séparées (4, 5) du côté du récipient de l'élément d'accouplement (1) est connectée à une extrémité d'une conduite de rinçage (15) et l'autre extrémité de la conduite de rinçage (15) est disposée dans le tiers du récipient (7) du côté de l'ouverture.

11. Système de prélèvement selon l'une quelconque des revendications 1 à 7,
**caractérisé en ce que**
le récipient (7) est disposé dans le système de prélèvement de telle sorte que l'ouverture de prélèvement (10) du récipient (7) soit disposée en bas et qu'un fond (9) du récipient (7) soit disposé en haut.

12. Système de prélèvement selon l'une quelconque des revendications 1 à 11,
**caractérisé en ce que**
la première ouverture de raccordement (2) est connectée à une conduite de prélèvement (16) dans laquelle est disposée une pompe (17) et/ou la deuxième ouverture de raccordement (3) est connectée à une conduite d'alimentation en fluide de rinçage (19) dans laquelle est disposée une pompe supplémentaire (20).

13. Utilisation du système de prélèvement selon l'une quelconque des revendications 1 à 12 dans un système de prélèvement pour prélever un nageant phytosanitaire dans un récipient jetable.
